# EUROPÄISCHE PATENTSCHRIFT

(11) **EP 1 981 156 B1**
(45) Veröffentlichungstag und Bekanntmachung des Hinweises auf die Patenterteilung: **13.02.2013**
(21) Anmeldenummer: 08005642.7
(22) Anmeldetag: 26.03.2008
(51) Int. Cl.: H02K 41/02, H02K 41/03, H02K 11/00

(54) **Elektrische Linearantriebsvorrichtung**
Electric linear drive device
Dispositif d'entraînement linéaire électrique

(30) Priorität: 11.04.2007 DE 102007017968
(43) Veröffentlichungstag der Anmeldung: 15.10.2008
(73) Patentinhaber: FESTO AG & Co. KG, 73734 Esslingen (DE)
(72) Erfinder: Finkbeiner, Matthias, 71159 Mötzingen (DE); Gückel, Jürgen, 70794 Filderstadt (DE); Yigit, Hava, 73061 Ebersbach (DE)
(74) Vertreter: Kocher, Mark Werner

(56) Entgegenhaltungen:
- EP-A1- 0 726 118
- US-A1- 2005 140 214

## Beschreibung

Die Erfindung betrifft eine elektrische Linearantriebsvorrichtung, wie sie beispielsweise aus der EP 1150416 A1, der DE 10244261 A1 oder der DE 29705315 U bekannt ist. Zur Steuerung oder Regelung der Linearbewegung oder zum Anfahren gewünschter Positionen ist grundsätzlich ein Positionserfassungssystem erforderlich. Hierzu ist beispielsweise aus der genannten DE 29705315 U ein integriertes Positionsmesssystem bekannt, bei dem die Ströme durch die Messspulen zur Positionserfassung ausgewertet werden. Für höhere Ansprüche an die Messgenauigkeit ist dieses Messverfahren jedoch nicht geeignet. Aus der EP 1150416 A1 ist ein externes Positionsmesssystem bekannt, bei dem eine parallel zum Linearmotor geführte Positionsmessstange mit einem Sensor zusammenwirkt. Der bekannte Linearmotor weist ein aus einem Gehäuse ausfahrendes Magnetsystem auf, wodurch die Gefahr besteht, dass das Messergebnis der Positionsmessung verfälscht oder beeinträchtigt wird. Weitere Linearantriebe sind aus EP 0726 118 A1 und aus US 2005/140214 A1 bekannt.

Eine Aufgabe der vorliegenden Erfindung besteht darin, eine sehr präzise arbeitende elektrische Linearantriebsvorrichtung mit sehr exakter und vor magnetischen Einflüssen möglichst wenig beeinträchtiger Positionsmessvorrichtung zu schaffen.

Diese Aufgabe wird erfindungsgemäß durch eine elektrische Linearantriebsvorrichtung mit den Merkmalen des Anspruchs 1 gelöst.

Durch wenigstens zwei im Basisgehäuse der Linearantriebsvorrichtung geführte Führungsstangen wird eine sehr exakte lineare Bewegung gewährleistet. Der eine Permanentmagnetanordnung aufweisende Läufer verläuft innerhalb eines als Magnetrückschlussglied dienenden Motorgehäuses, das ein Langspulensystem besitzt, sodass durch das Magnetrückschlussglied eine magnetische Abschirmung des Läufers und damit des Linearmotors erreicht wird, sodass das externe, eine Positionsmessstange aufweisende Positionsmesssystem weitgehend unbeeinflusst von störenden magnetischen Einflüssen ist, die die Positionsmessgenauigkeit beeinträchtigen können.

Durch die in den Unteransprüchen aufgeführten Maßnahmen sind vorteilhafte Weiterbildungen und Verbesserungen der im Anspruch 1 angegebenen Linearantriebsvorrichtung möglich.

In vorteilhafter Weise ist der Querschnitt der Antriebsstange kleiner als der halbe Querschnitt einer der Führungsstangen, vorzugsweise kleiner als 25 % des Querschnitts einer der Führungsstangen. Dadurch bildet die Antriebsstange eine Art Festkörpergelenk und benötigt infolge ihres geringen Querschnitts keine gelenkige Lagerung im Antriebselement. Dennoch wird insbesondere bei zwei Führungsstangen eine sehr präzise Linearführung erreicht, insbesondere wenn sie symmetrisch zu beiden Seiten der Antriebsstange angeordnet sind.

Zur präzisen Führung der Führungsstangen im Basisgehäuse sind zweckmäßigerweise Kugelbuchsenführungen vorgesehen.

Der wenigstens eine Positionssensor dient vorzugsweise zur Sensierung von Markierungen zur Positionserfassung an der Positionsmessstange und ist in oder am Basisgehäuse im Bereich der Positionsmessstange angeordnet, um mit dieser zusammenzuwirken. Dabei sind zweckmäßigerweise magnetische Markierungen zur magnetischen Positionserfassung vorgesehen.

In einer zweckmäßigen Ausgestaltung der Positionsmessvorrichtung ist eine Vielzahl von längs der Positionsmessstange als digitale Zählmarkierungen und/oder wenigstens eine Positionsmarkierung zur Erfassung wenigstens einer Bezugsposition vorgesehen. Eine besonders exakte Positionserfassung wird dabei dadurch erreicht, dass ab der erfassten Bezugsposition die Zählmarkierungen in Abhängigkeit der Bewegungsrichtung in einer elektronischen Zähleinrichtung aufwärts beziehungsweise abwärts gezählt werden.

Dabei ist vorzugsweise ein Positionssensor zur Erfassung der Zählmarkierungen und/oder wenigstens ein Positionssensor zur Erfassung der wenigstens einen Positionsmarkierung vorgesehen, wobei zweckmäßigerweise beide Positionssensoren vorgesehen und zu beiden Seiten des Eintauchkanals für die Positionsmessstange angeordnet sind.

Zur Aufnahme der Positionssensoren dient in vorteilhafter Weise ein innerer Kanal und/oder ein nach außen offener nutartiger Kanal im Basisgehäuse.

Das Basisgehäuse besitzt zweckmäßigerweise innere Kabelkanäle zur Aufnahme von Sensorleitungen und/oder Versorgungs- und Steuerleitungen für den Linearmotor, sodass das Basisgehäuse als Abschirmung dient und eine externe Leitungsverlegung verhindert wird. Dabei können die Sensorleitungen einerseits und die Versorgungs- und Steuerleitungen andererseits zur gegenseitigen Abschirmung in getrennten Kabelkanälen verlaufen. Die Kabelkanäle und damit die Leitungen münden bevorzugt an einer Anschlussstelle für eine externe Leitung.

Ein Ausführungsbeispiel der Erfindung ist in der Zeichnung dargestellt und in der nachfolgenden Beschreibung näher erläutert. Es zeigen:

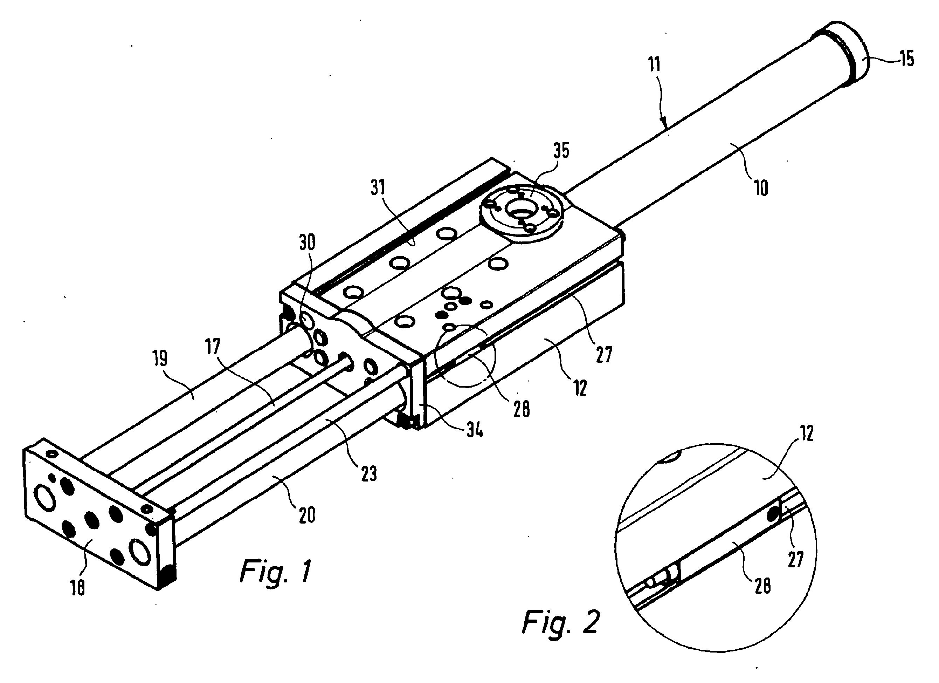

- Figur 1: eine perspektivische Darstellung einer elektrischen Linearantriebsvorrichtung bei ausgefahrener Antriebsstange als Ausführungsbeispiel der Erfindung,
- Figur 2: eine vergrößerte Darstellung einer durch einen Kreis gekennzeichneten Stelle in Figur 1, an der ein Positionssensor in einem nach außen offenen nutartigen Kanal angeordnet ist,
- Figur 3: eine stirnseitige Ansicht des Basisgehäuses und
- Figur 4: eine Horizontalschnittdarstellung der Linearantriebsvorrichtung entlang der in Figur 3 gekennzeichneten Schnittlinie A-A.

Bei dem dargestellten Ausführungsbeispiel für eine elektrische Linearantriebsvorrichtung ist ein rohrförmiges, langgestrecktes Motorgehäuse 10 eines Linearmotors 11 in einem flachen, quaderförmigen Basisgehäuse 12 fixiert. Dabei erstreckt sich das Motorgehäuse 10 in einem entsprechenden Aufnahmekanal durch das Basisgehäuse 12 und ragt an einer Seite über dieses hinaus. Das Motorgehäuse 10 besitzt einen kreisförmigen beziehungsweise kreisringförmigen Querschnitt.

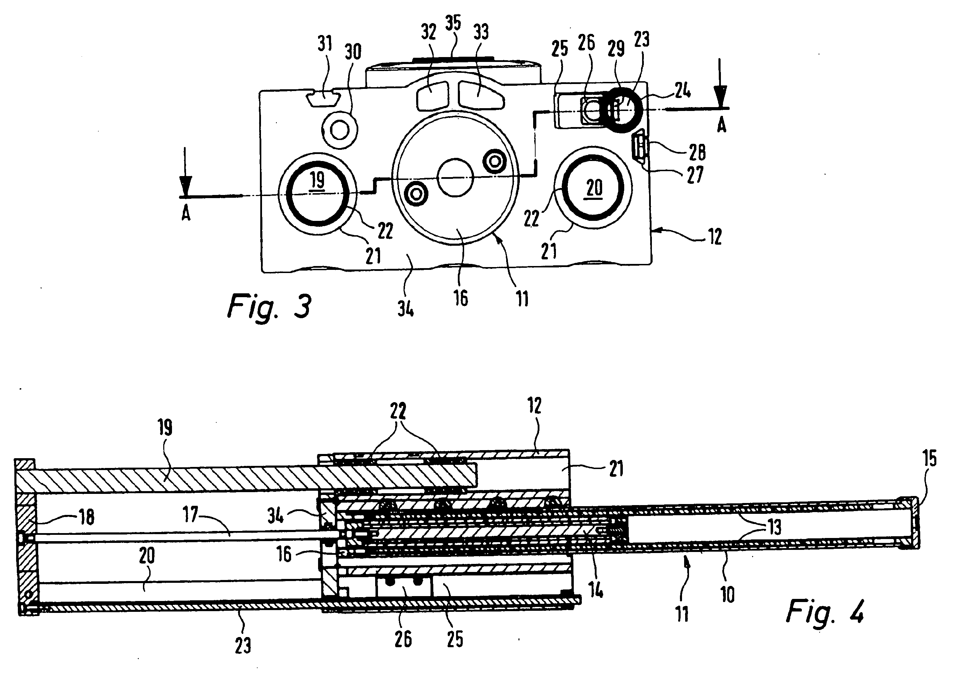

An der Innenseite des Motorgehäuses 10 erstreckt sich ein Langspulensystem 13 als Antriebsspulenanordnung im Wesentlichen entlang des gesamten Motorgehäuses 10. Innerhalb des Langspulensystems 13 ist ein eine aus mehreren Permanentmagneten bestehende Permanentmagnetanordnung aufweisender Läufer 14 innerhalb des Motorgehäuses 10 längsverschiebbar geführt. Die Magnetanordnung wirkt dabei in an sich bekannter Weise mit dem Langspulensystem 13 zur Erzielung einer Antriebskraft zusammen. Die Länge des Läufers 14 ist wesentlich kürzer als die Länge des Langspulensystems 13 beziehungsweise des Motorgehäuses 10 und beträgt im Ausführungsbeispiel etwa die halbe Länge des Motorgehäuses 10. An der basisge-häuseseitigen Stirnseite des Läufers 14 ist ein Pufferelement 16 angeordnet, um einen harten Anschlag beim vollständigen Ausfahren des Linearantriebs zu verhindern, wie dies in Figur 4 dargestellt ist.

Das Motorgehäuse 10 ist an seinen entgegengesetzten Enden durch Deckel 15 abgeschlossen, wobei sich eine mit dem Läufer 14 fest verbundene Antriebsstange 17 an einem Ende nach außen durch einen Gehäusedeckel 34 hindurch erstreckt. Diese Antriebsstange 17 ist mit ihrem gegenüberliegenden Endbereich an einem plattenförmigen Antriebselement 18 fixiert, das selbstverständlich prinzipiell eine beliebige Form aufweisen kann. Das Antriebselement 18 kann dabei selbst das angetriebene Element bilden oder ein anzutreibendes Element wird mit dem Antriebselement 18 verbunden. Zur Verhinderung eines harten Aufpralls beim Einfahren der Antriebsstange 17 können beispielsweise Pufferelemente am Gehäusedeckel 34 und/oder am Antriebselement 18 fixiert sein.

Zwei zu beiden Seiten der Antriebsstange 17 parallel angeordnete Führungsstangen 19, 20 sind ebenfalls am Antriebselement 18 fixiert und erstrecken sich in Führungskanäle 21 des Basisgehäuses 12 hinein. Dort sind sie mittels Kugelbuchsenführungen 22 geführt, wobei prinzipiell auch andere Linearführungen möglich sind.

Der Durchmesser beziehungsweise Querschnitt der Antriebsstange 17 ist wesentlich kleiner als der der Führungsstangen 19, 20. Im Ausführungsbeispiel besitzt die Antriebsstange 17 einen Querschnitt, der 15 % des Querschnitts der Führungsstangen 19, 20 entspricht. Unter dem Begriff "Querschnitt" wird dabei die von der Umfangslinie der jeweiligen Stange eingeschlossene Querschnittsfläche verstanden. Hierdurch bildet die Antriebsstange 17 wirkungsmäßig ein Festkörpergelenk, das eine gelenkige Fixierung am Antriebselement 18 nicht erforderlich macht. Der Querschnitt der Antriebsstange 17 kann selbstverständlich variieren, er sollte jedoch weniger als 50 % des Querschnitts einer Führungsstange betragen.

Die beiden Führungsstangen 19, 20 sind symmetrisch zu beiden Seiten der Antriebsstange als optimale Anordnung geführt. Andere Anordnungen sind prinzipiell auch möglich, wobei auch die Zahl der Führungsstangen 19, 20 größer sein kann. So können beispielsweise auch vier Führungsstangen in einer entsprechenden mechanischen Ausgestaltung vorgesehen sein.

Zur Positionsmessung ist eine Positionsmessstange 23 ebenfalls am Antriebselement 18 fixiert und erstreckt sich in einen Aufnahmekanal 24 im Basisgehäuse 12 hinein. In einem neben diesem Aufnahmekanal 24 angeordneten parallelen Sensorkanal 25 ist ein Positionssensor 26 angeordnet, der mit der Positionsmessstange 23 zusammenwirkt. Auf der gegenüberliegenden Seite des Aufnahmekanals 24 verläuft ebenfalls parallel dazu ein nach außen offener nutartiger Kanal 27, in dem ein weiterer Positionssensor 28 längsverschiebbar geführt und in einer gewünschten Messposition fixiert ist. Diese Position stellt eine Bezugsposition dar, wobei der Positionssensor 28 als magnetfeldempfindlicher Sensor ausgebildet ist und mit einem magnetisierten Bereich der Positionsmessstange 23 oder mit einem Magnetelement an dieser Positionsmessstange 23 zusammenwirkt. Prinzipiell können mehrere solcher Positionssensoren 28 in den nutartigen Kanal 27 zur Erfassung mehrerer Bezugspositionen angeordnet sein.

Auf der gegenüberliegenden Seite ist die Positionsmessstange 23 streifenförmig magnetisiert, wobei im Ausführungsbeispiel ein streifenförmiges Element 29 vorgesehen ist, das seinerseits streifenförmig magnetisiert ist und in einer entsprechenden Längsausnehmung der Positionsmessstange 23 fixiert ist. Dieses streifenförmige Element 29 wirkt mit dem ersten Positionssensor 26 zusammen, wobei die streifenförmigen Magnetisierungen jeweils ein Sensorsignal erzeugen und die Sensorsignale zur Positionsauswertung in einer nicht dargestellten Zähleinrichtung in Abhängigkeit der Bewegungsrichtung aufwärts oder abwärts gezählt werden.

In einer einfacheren Ausführung können auch lediglich Positionssensoren 28 zur Erfassung bestimmter Positionen vorgesehen sein.

Die kontinuierliche Positionserfassung mittels eines streifenförmigen magnetisierten Elements und die Erfassung von Bezugspositionen können auch getrennt angeordnet sein. So kann beispielsweise die Positionsmessstange 23 lediglich mit dem Positionssensor 26 zur Erfassung der Signale des streifenförmigen Elements 29 zusammenwirken, während wenigstens ein Positionssensor zur Erfassung von Positionspositionen in einer weiteren, nicht dargestellten Positionsmessstange angeordnet sein kann, die beispielsweise in einen weiteren Aufnahmekanal 30 eintaucht. Der Positionssensor 28 kann dabei in einem weiteren nutartigen Kanal 31 fixiert sein, der im Bereich des Aufnahmekanals 30 angeordnet ist.

Andere bekannte Positionsmessverfahren können selbstverständlich alternativ eingesetzt werden. So kann die Positionsmessstange 23 beispielsweise eine Reihe von Hallsensoren oder sonstigen magnetfeldempfindlichen Sensoren tragen, die mit einem magnetischen Element am Gehäuse zusammenwirken oder eine solche Reihe von magnetfeldempfindlichen Sensoren kann im Gehäuse, beispielsweise im Sensorkanal 25 positioniert sein und mit einem magnetischen Element an der Positionsmesstange 23 zusammenwirken. In an sich bekannter Weise können auch batteriebetriebene Systeme eingesetzt werden, die mit reduzierter Genauigkeit und anderen funktionalen Einschränkungen arbeiten, jedoch bei Stromausfall keinen Verlust von Weginformationen erleiden. Ein solches batteriebetriebenes System wirkt mit einem präzisen Inkrementalmesssystem zusammen, wie dies zum Ausführungsbeispiel beschrieben wurde. Das Feinsystem liefert die Weginformation für die Steuerung und das Batteriebetriebene hält den positionsabhängigen Zählerstand aufrecht.

Das Motorgehäuse 10 besteht aus einem ferromagnetischen Material, das als Magnetrückschlussglied für die Magnetanordnung des Linearmotors 11 dient und gleichzeitig als magnetische Abschirmung dient, die verhindert, dass Magnetfelder nach außen gelangen. Durch diese Abschirmung wird verhindert, dass die Positionsmessvorrichtung durch magnetische Felder des Linearmotors 11 in ihrer Funktion beeinträchtigt wird, um so eine höhere Genauigkeit zu erreichen.

Das Basisgehäuse 12 weist zwei in Längsrichtung verlaufende Kabelkanäle 32, 33 auf, wobei der eine Kabelkanal 32 zur Aufnahme der Zuführungsleitungen zum Linearmotor 11 beziehungsweise zum Langspulensystem 13 dient und der andere Kabelkanal 33 zur Aufnahme von Sensorleitungen, sodass eine gegenseitige Abschirmung erreicht wird. Hierbei können selbstverständlich noch weitere, nicht dargestellte Sensoren vorgesehen sein, wie Temperatursensoren und dergleichen. Querkanäle von den Kabelkanälen 32, 33 zum Motorgehäuse 10 beziehungsweise zu den Positionssensoren 26, 28 können beispielsweise in die dem Antriebselement 18 zugewandte Stirnseite des Basisgehäuses 12 in nicht dargestellter Weise eingeformt oder eingefräst sein. Der Gehäusedeckel 34 verschließt dann die Mündungen der Kabelkanäle 32, 33 und die Querkanäle.

Die Kabelkanäle 32, 33 und eventuelle weitere Kabelkanäle laufen an einer elektrischen Anschlussstelle 35 an der Gehäuseoberseite zusammen, wobei die Leitungen dort mit einem Stecker oder einer sonstigen Anschlussvorrichtung zur Verbindung mit einer externen Steuereinrichtung elektrisch verbunden werden.

## Patentansprüche

1. Elektrische Linearantriebsvorrichtung, mit einem Basisgehäuse (12) und mit wenigstens zwei mit einem Antriebselement (18) verbundenen und im Basisgehäuse (12) geführten Führungsstangen (19, 20)
**gekennzeichnet durch**
einen in dem Basisgehäuse (12) gehaltenen elektrischen Linearmotor (11), der ein in einem als Magnetrückschlussglied dienenden langgestreckten Motorgehäuse (10) angeordnetes Langspulensystem (13) besitzt, wobei ein bezüglich des Langspulensystems (13) wesentlich kürzerer, eine Permanentmagnetanordnung aufweisender Läufer (14) innerhalb des Motorgehäuses (10) verschiebbar geführt ist und über eine nach außen sich erstreckende Antriebsstange (17) das Antriebselement (18) linear antreibt,
und mit einer mit dem Antriebselement (18) verbundenen und positionsabhängig in das Basisgehäuse (12) eintauchenden Positionsmessstange (23), die parallel und beabstandet zur Antriebsstange (17) angeordnet ist und mit wenigstens einem Positionssensor (26, 28) zur Positionserfassung zusammenwirkt.

2. Linearantriebsvorrichtung nach Anspruch 1, **dadurch gekennzeichnet, dass** der Querschnitt der Antriebsstange (17) kleiner als der halbe Querschnitt einer der Führungsstangen (19, 20) ist.

3. Linearantriebsvorrichtung nach Anspruch 1 oder 2, **dadurch gekennzeichnet, dass** die Führungsstangen (19, 20) zu beiden Seiten der Antriebsstange (17) im Wesentlichen symmetrisch angeordnet sind.

4. Linearantriebsvorrichtung nach einem der vorhergehenden Ansprüche, **dadurch gekennzeichnet, dass** die Führungsstangen (19, 20) im Basisgehäuse (12) Kugelbuchsenführungen (22) aufweisen.

5. Linearantriebsvorrichtung nach einem der vorhergehenden Ansprüche, **dadurch gekennzeichnet, dass** der wenigstens eine Positionssensor (26, 28) zur Sensierung von Markierungen an der Positionsmessstange (23) zur Positionserfassung im oder am Basisgehäuse (12) im Bereich der Positionsmessstange (23) angeordnet ist.

6. Linearantriebsvorrichtung nach Anspruch 5, **dadurch gekennzeichnet, dass** eine Vielzahl von Markierungen längs der Positionsmessstange (23) als digitale Zählmarkierungen und/oder wenigstens eine Positionsmarkierung zur Erfassung wenigstens einer Bezugsposition vorgesehen ist.

7. Linearantriebsvorrichtung nach Anspruch 5 oder 6, **dadurch gekennzeichnet, dass** ein Positionssensor (26) zur Erfassung der Zählmarkierungen und/oder wenigstens ein Positionssensor (28) zur Erfassung der wenigstens einen Positionsmarkierung vorgesehen ist.

8. Linearantriebsvorrichtung nach Anspruch 7, **dadurch gekennzeichnet, dass** die beiden Positionssensoren (26, 28) zu beiden Seiten eines Eintauchkanals (24) für die Positionsmessstange (23) angeordnet sind.

9. Linearantriebsvorrichtung nach einem der Ansprüche 5 bis 8, **dadurch gekennzeichnet, dass** im Basisgehäuse (12) ein innerer Kanal (30) und/oder ein nach außen offener nutartiger Kanal (31) zur Sensoraufnahme vorgesehen ist.

10. Linearantriebsvorrichtung nach einem der vorhergehenden Ansprüche, **dadurch gekennzeichnet, dass** das Basisgehäuse (12) innere Kabelkanäle (32, 33) zur Aufnahme von Sensorleitungen und/oder Versorgungs- und Steuerleitungen für den Linearmotor (11) aufweist.

11. Linearantriebsvorrichtung nach Anspruch 10, **dadurch gekennzeichnet, dass** die Kabelkanäle (32, 33) an einer Anschlussstelle (35) für eine externe Leitung münden.

12. Linearantriebsvorrichtung nach einem der vorhergehenden Ansprüche, **dadurch gekennzeichnet, dass** an einer Stirnseite des Basisgehäuses (12) mündende oder verlaufende Kanäle durch einen Gehäusedeckel (34) abgedeckt sind.

13. Linearantriebsvorrichtung nach einem der vorhergehenden Ansprüche, **dadurch gekennzeichnet, dass** das Motorgehäuse (10) rohrförmig mit kreisförmigem Querschnitt ausgebildet ist.

14. Linearantriebsvorrichtung nach einem der vorhergehenden Ansprüche, **dadurch gekennzeichnet, dass** das Basisgehäuse (12) im Wesentlichen quaderförmig ausgebildet ist.

## Claims

1. Electric linear drive device having a base housing (12) and at least two guide bars (19, 20) connected to a drive element (18) and guided in the base housing (12),
**characterised by**
an electric linear motor (11) held in the base housing (12), which linear motor (11) comprises a long coil system (13) located in an elongated motor housing (10) acting as a magnetic yoke member, wherein a rotor (14) significantly shorter than the long coil system (13) and comprising a permanent magnet arrangement is displaceably guided within the motor housing (10) and drives the drive element (18) in a linear motion via a drive bar (17) extending outwards,
and by a position sensing bar (23) connected to the drive element (18) and dipping into the base housing (12) as a function of position, which position sensing bar (23) is arranged parallel to and at a distance from the drive bar (17) and acts together with at least one position sensor (26, 28) for position detection.

2. Linear drive device according to claim 1, **characterised in that** the cross-section of the drive bar (17) is less than half the cross-section of one of the guide bars (19, 20).

3. Linear drive device according to claim 1 or 2, **characterised in that** the guide bars (19, 20) are arranged substantially symmetrically on both sides of the drive bar (17).

4. Linear drive device according to any of the preceding claims, **characterised in that** the guide bars (19, 20) are provided with spherical sleeve guides (22) in the base housing (12).

5. Linear drive device according to any of the preceding claims, **characterised in that** the at least one position sensor (26, 28) is located in or on the base housing (12) in the region of the position sensing bar (23) for sensing markings on the position sensing bar (23) for position detection.

6. Linear drive device according to claim 5, **characterised in that** a plurality of markings is provided along the position sensing bar (23) to act as digital counting marks and/or **in that** at least one position mark for the detection of at least one reference position is provided.

7. Linear drive device according to claim 5 or 6, **characterised in that** a position sensor (26) for the detection of the counting marks and/or at least one position sensor (28) for the detection of the at least one position mark is/are provided.

8. Linear drive device according to claim 7, **characterised in that** the two position sensors (26, 28) are located on the two sides of a dip-in channel (24) for the position sensing bar (23).

9. Linear drive device according to any of claims 5 to 8, **characterised in that** an inner channel (30) and/or an outward-opening groove-like channel (31) is/are provided in the base housing (12) for the accommodation of sensors.

10. Linear drive device according to any of the preceding claims, **characterised in that** the base housing (12) comprises inner cable ducts (32, 33) for the accommodation of sensor lines and/or supply and control lines for the linear motor (11).

11. Linear drive device according to claim 10, **characterised in that** the cable ducts (32, 33) terminate at a connecting point (35) for an external line.

12. Linear drive device according to any of the preceding claims, **characterised in that** channels/ducts terminating or extending at an end face of the base housing (12) are covered by a housing cover (34).

13. Linear drive device according to any of the preceding claims, **characterised in that** the motor housing (10) is tubular with a circular cross-section.

14. Linear drive device according to any of the preceding claims, **characterised in that** the base housing (12) is substantially rectangular.

## Revendications

1. Dispositif d'entraînement linéaire électrique avec un boîtier de base (12) et avec au moins deux tiges de guidage (19, 20) reliées à un élément d'entraînement (18) et guidées dans le boîtier de base (12),
**caractérisé par** un moteur linéaire (11) électrique contenu dans le boîtier de base (12) qui possède un système de bobine longitudinale (13) disposé dans un carter de moteur (10) étiré en longueur servant d'organe de blindage magnétique, un rotor (14) sensiblement plus court que le système de bobine longitudinale (13), présentant un ensemble d'aimants permanents, étant guidé de manière mobile dans le carter de moteur (10) et entraînant l'élément d'entraînement (18) linéairement par une tige d'entraînement (17) s'étendant vers l'extérieur,
et avec une tige de mesure de position (23) s'enfonçant en fonction de la position dans le boîtier de base (12) et reliée à l'élément d'entraînement (18), qui est disposée parallèlement et à distance de la tige d'entraînement (17) et coagit avec au moins un capteur de position (26, 28) pour la détection de la position.

2. Dispositif d'entraînement linéaire selon la revendication 1, **caractérisé en ce que** la section transversale de la tige d'entraînement (17) est inférieure à la demi-section transversale de l'une des tiges de guidage (19, 20).

3. Dispositif d'entraînement linéaire selon la revendication 1 ou 2, **caractérisé en ce que** les tiges de guidage (19, 20) sont disposées sensiblement symétriquement des deux côtés de la tige d'entraînement (17).

4. Dispositif d'entraînement linéaire selon l'une quelconque des revendications précédentes, **caractérisé en ce que** les tiges de guidage (19, 20) présentent des guidages de douilles sphériques (22) dans le boîtier de base (12).

5. Dispositif d'entraînement linéaire selon l'une quelconque des revendications précédentes, **caractérisé en ce que** l'au moins un capteur de position (26, 28) est disposé pour la détection de marquages sur la tige de mesure de position (23) pour la détection de position dans ou sur le boîtier de base (12) dans la zone de la tige de mesure de position (23).

6. Dispositif d'entraînement linéaire selon la revendication 5, **caractérisé en ce qu'**une pluralité de marquages est prévue le long de la tige de mesure de position (23) en guise de marquages de comptage numériques et/ou au moins un marquage de position pour la détection d'au moins une position de référence.

7. Dispositif d'entraînement linéaire selon la revendication 5 ou 6, **caractérisé en ce qu'**un capteur de position (26) est prévu pour la détection des marquages de comptage et/ou au moins un capteur de position (28) pour la détection de l'au moins un marquage de position.

8. Dispositif d'entraînement linéaire selon la revendication 7, **caractérisé en ce que** les deux capteurs de position (26, 28) sont disposés des deux côtés d'un canal d'immersion (24) pour la tige de mesure de position (23).

9. Dispositif d'entraînement linéaire selon l'une quelconque des revendications 5 à 8, **caractérisé en ce qu'**un canal intérieur (30) et/ou un canal (31) de type rainure ouvert vers l'extérieur pour la réception du capteur est prévu dans le boîtier de base (12).

10. Dispositif d'entraînement linéaire selon l'une quelconque des revendications précédentes, **caractérisé en ce que** le boîtier de base (12) présente des caniveaux intérieurs (32, 33) pour la réception de conduites de capteur et/ou de conduites d'alimentation et de commande pour le moteur linéaire (11).

11. Dispositif d'entraînement linéaire selon la revendication 10, **caractérisé en ce que** les caniveaux (32, 33) débouchent sur un point de raccordement (35) pour une conduite externe.

12. Dispositif d'entraînement linéaire selon l'une quelconque des revendications précédentes, **caractérisé en ce que** des canaux s'étendant ou débouchant sur un côté frontal du boîtier de base (12) sont recouverts par un couvercle de boîtier (34).

13. Dispositif d'entraînement linéaire selon l'une quelconque des revendications précédentes, **caractérisé en ce que** le carter de moteur (10) est réalisé en forme de tube avec une section transversale circulaire.

14. Dispositif d'entraînement linéaire selon l'une quelconque des revendications précédentes, **caractérisé en ce que** le boîtier de base (12) est réalisé sensiblement parallélépipédique.
